# FASCICULE DE BREVET EUROPEEN

(11) **EP 2 252 782 B1**
(45) Date de publication et mention de la délivrance du brevet: **17.01.2018**
(21) Numéro de dépôt: 08850724.9
(22) Date de dépôt: 06.11.2008
(51) Int. Cl.: F02B 29/04

(54) **ECHANGEUR DE CHALEUR POUR CIRCUIT D'ALIMENTATION EN AIR D'UN MOTEUR DE VEHICULE AUTOMOBILE**
WÄRMETAUSCHER FÜR EINEN LUFTVERSORGUNGSKREIS EINES KRAFTFAHRZEUGMOTORS
HEAT EXCHANGER FOR AN AIR SUPPLY CIRCUIT OF A MOTOR VEHICLE ENGINE

(30) Priorité: 15.11.2007 FR 0708019
(43) Date de publication de la demande: 24.11.2010
(73) Titulaire: Valeo Systèmes Thermiques, 78321 Le Mesnil Saint-Denis Cedex (FR)
(72) Inventeur: BOURGOIN, Guillaume, F-75015 Paris (FR); ODILLARD, Laurent, F-72390 Le Luart (FR); DE PELSEMAEKER, Georges, F-78125 Poigny-La-Foret (FR); MARTINS, Carlos, F-78150 Le Chesnay (FR); GESSIER, Bertrand, F-78490 Montfort-L'Amaury (FR); MOROZ, Stéphanie, F-78000 Versailles (FR)
(74) Mandataire: Metz, Gaëlle
(86) Numéro de dépôt international: PCT/EP2008/065058
(87) Numéro de publication internationale: WO 2009/062879

(56) Documents cités:
- EP-A- 0 646 702
- EP-A- 0 940 567
- JP-A- 62 046 194
- US-A- 3 712 282
- US-A- 5 911 212

## Description

La présente invention concerne un échangeur de chaleur pour circuit d'alimentation en air d'un moteur de véhicule automobile.

L'invention s'applique au domaine général de l'alimentation en air des moteurs de véhicules automobiles, et plus particulièrement aux moteurs dont l'air d'alimentation provient d'un compresseur ou d'un turbocompresseur, on parle alors d'air de suralimentation.

Dans la suite, on entendra par air d'alimentation, ou de suralimentation, aussi bien de l'air provenant du seul système d'admission du moteur qu'un mélange d'air et de gaz d'échappement récupérés en sortie du moteur, conformément au système généralement connu sous l'acronyme d'EGR (« Exhaust Gas Recirculation »).

Afin d'augmenter la densité de l'air d'admission d'un moteur turbocompressé, il est connu de refroidir l'air de suralimentation sortant du compresseur au moyen d'un échangeur de chaleur qui est aussi appelé refroidisseur d'air de suralimentation ou RAS en abrégé.

Il est connu des refroidisseurs d'air de suralimentation qui utilisent comme fluide caloporteur du liquide de refroidissement moteur comme de l'eau glycolée.

Un refroidisseur d'air de suralimentation pouvant être utilisé dans le cadre de l'invention comporte d'au moins un faisceau d'échange de chaleur. Ce faisceau d'échange de chaleur peut comporter des tubes parallèles ou un empilement de plaques formant alternativement des canaux de circulation pour l'air suralimenté à refroidir et des canaux pour la circulation du liquide de refroidissement moteur.

Un tel refroidisseur peut être utilisé dans un circuit d'alimentation en air d'un moteur de véhicules automobiles. Un circuit connu comprend une première branche, dite branche de refroidissement, et une deuxième branche, dite branche de contournement. La branche de refroidissement comporte un refroidisseur d'air de suralimentation et la deuxième branche comprend une conduite de dérivation ou de contournement du refroidisseur (« by-pass »). La branche de contournement permet à l'air de suralimentation d'éviter de traverser le refroidisseur et donc d'y être refroidi.

Lors de la phase de chauffe (« warm-up ») pendant laquelle le moteur n'est pas encore suffisamment chaud, il n'y a pas lieu de refroidir l'air de suralimentation en le faisant passer à travers le refroidisseur d'air de suralimentation. Ainsi, l'air de suralimentation est entièrement dirigé vers la branche de contournement. Il n'y a donc pas de circulation d'air de suralimentation dans la branche de refroidissement et donc dans le refroidisseur d'air de suralimentation.

Au contraire, lorsque la température du moteur a atteint une valeur déterminée, l'air de suralimentation est entièrement dirigé dans la branche d'échange et est refroidi dans le refroidisseur d'air de suralimentation. Dans un tel cas de figure, il n'y a pas de circulation d'air de suralimentation dans la branche de contournement.

Afin de notamment réaliser les différentes fonctions mentionnées plus haut, les circuits d'alimentation en air connus comprennent sur chaque branche (de refroidissement et de contournement) des actionneurs qui sont en général des vannes dont la technologie souvent complexe entraîne un surcoût de fabrication important et une gestion délicate par les systèmes de contrôle électronique du moteur du véhicule.

D'autre part, ces actionneurs sont encombrants et lourds, ce qui est pénalisant en termes de volume occupé par le circuit d'alimentation dans le moteur, et également en termes de poids.

Enfin, l'installation des actionneurs sur les différentes branches de du circuit nécessite un temps de montage relativement long du fait que l'étanchéité au niveau des liaisons entre les actionneurs et les conduites des branches sur lesquelles ils sont raccordés doit être parfaite. Un tel refroidisseur est connu du JP62046194. Aussi, un but de la présente invention est de proposer un échangeur de chaleur pour un circuit d'alimentation en air d'un moteur de véhicule automobile, comprenant un faisceau d'échange de chaleur et au moins une boîte collectrice, qui permettrait d'obtenir une architecture d'échangeur simplifiée, moins encombrante et moins coûteuse que les échangeurs de chaleur connus.

Ce but est atteint, conformément à l'invention, du fait que l'échangeur de chaleur comprend une vanne de contrôle du débit de l'air disposée dans la boîte collectrice de l'échangeur. La vanne de contrôle est une vanne comprenant un corps comportant trois ouvertures et un unique organe rotatif mobile à l'intérieur du corps de manière à contrôler la circulation d'air à travers le faisceau d'échange et/ou une conduite de contournement du faisceau selon une loi définie en fonction de la position angulaire de l'organe rotatif dans le corps.

Ainsi, un circuit d'alimentation en air du moteur comportant un échangeur de chaleur selon l'invention ne comporte qu'une seule vanne de contrôle alors que les circuits connus nécessitent au moins une vanne par branche de refroidissement et de contournement. Il en résulte un coût de fabrication réduit et une plus grande facilité de montage. De plus, la vanne de contrôle étant intégrée à une boîte collectrice du refroidisseur, le volume occupé par l'ensemble « échangeur-vanne » est sensiblement égal ou à peine supérieur au volume du refroidisseur lui-même.

Dans ce mode de réalisation, la vanne de contrôle est une vanne du type « trois voies » avec réglage des débits par un boisseau permettant avantageusement de régler le débit d'air de suralimentation non seulement dans la branche de refroidissement mais également dans la branche de contournement. On peut alors obtenir un réglage fin de la température et du débit de l'air d'alimentation alors que, dans les circuits d'alimentation en air connus, la vanne utilisée pour le circuit de contournement ne peut prendre que deux positions, à savoir ouverte ou fermée.

Selon un mode de réalisation, l'échangeur comporte en outre une conduite de contournement du faisceau.

S'agissant de la boîte collectrice, l'invention propose deux modes de réalisation : l'un dans lequel ladite boîte collectrice est une boîte collectrice de sortie du refroidisseur d'air d'alimentation, et l'autre dans lequel ladite boîte collectrice est une boîte collectrice d'entrée du refroidisseur d'air d'alimentation.

Dans cette dernière réalisation, l'invention prévoit que l'échangeur comporte en outre une deuxième boite collectrice dite boîte de sortie de l'échangeur. Dans un mode de réalisation particulier, la boite de sortie forme au moins en partie un boîtier destiné à recevoir le faisceau d'échange de chaleur.

Selon une variante de l'invention, la conduite de contournement est intégrée au boîtier et débouche à travers une ouverture ménagée dans une paroi du boîtier.

On obtient ainsi un échangeur de chaleur d'architecture très compacte dans laquelle l'échangeur et la conduite de contournement sont placés dans un seul et même boîtier, cette architecture pouvant être complétée du fait que, ladite boîte collectrice d'entrée munie de la vanne de contrôle constitue un couvercle pour ledit boîtier. En particulier, ladite boîte collectrice d'entrée est soudée à ladite boîte de sortie.

Selon un mode de réalisation, la boite de sortie est un répartiteur d'air d'admission pour le moteur permettant une communication, par l'intermédiaire d'orifices, avec au moins une partie des conduits d'admission des têtes de cylindre du moteur.

Enfin, des tubulures d'entrée et de sortie du liquide de refroidissement dans le faisceau d'échange de chaleur peuvent également être prises en compte dans la réalisation de cette architecture compacte. A cet égard, il est prévu que ces dernières soient disposées à l'intérieur du boîtier.

La description qui va suivre en regard des dessins annexés, donnés à titre d'exemples non limitatifs, fera bien comprendre en quoi consiste l'invention et comment elle peut être réalisée.
La figure 1 a est une première vue en perspective d'un premier mode de réalisation d'un échangeur de chaleur selon l'invention.
La figure 1b est une deuxième vue en perspective éclatée de l'échangeur de chaleur de la figure 1a sans le faisceau d'échange de chaleur.
La figure 2a est une vue en perspective éclatée d'un deuxième mode de réalisation d'un échangeur de chaleur selon l'invention.
La figure 2b est une vue de côté de l'échangeur de chaleur de la figure 2a, cet échangeur étant assemblé.

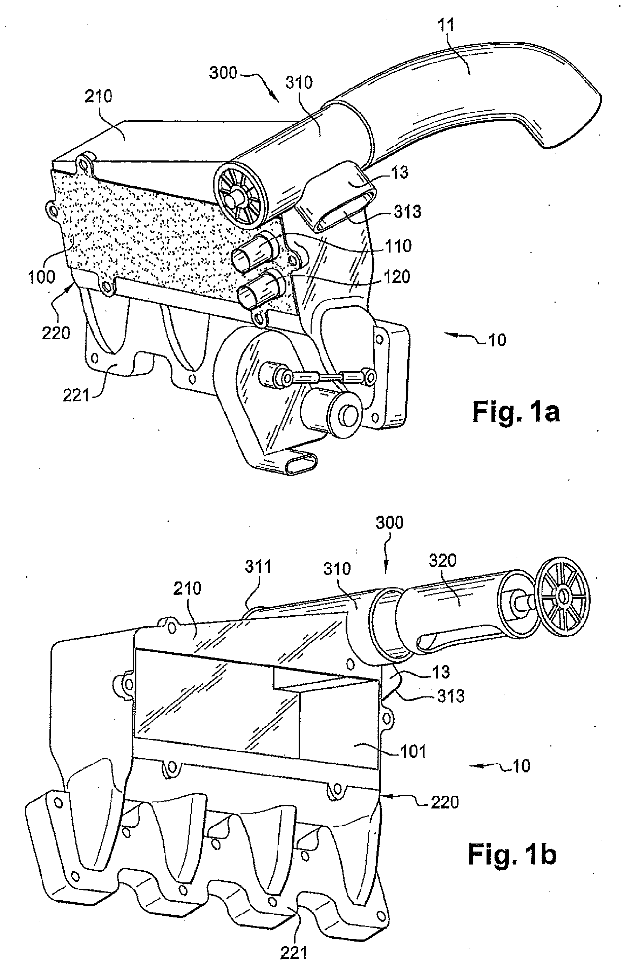

Sur les figures 1a et 1b est représenté en perspective selon deux vues différentes, à savoir respectivement une vue « assemblée » et une vue éclatée sans faisceau d'échange de chaleur, un échangeur 10 de chaleur pour circuit d'alimentation en air d'un moteur de véhicule automobile.

Cet échangeur 10 de chaleur est plus particulièrement destiné à fournir au moteur de l'air de suralimentation, provenant d'un compresseur ou d'un turbocompresseur disposé sur la ligne d'admission, qui est refroidi. Comme le montre la figure 1a, l'air de suralimentation est amené à l'échangeur 10 par un conduit 11 d'entrée d'air.

De manière à refroidir l'air de suralimentation avant qu'il ne soit introduit dans les cylindres du moteur, l'échangeur 10 de chaleur comporte un faisceau d'échange de chaleur 100 que l'air de suralimentation doit traverser pour être refroidi. L'échangeur de chaleur comporte en outre une boîte collectrice 210 d'entrée communiquant, ici, avec le conduit 11 d'entrée d'air et une boîte 220 de sortie. Dans cet exemple, la boite de sortie 220 est chargée de distribuer l'air de suralimentation, refroidi après son passage dans le faisceau d'échange de chaleur 100, entre les cylindres du moteur à travers les conduites d'admission, ici au nombre de quatre, d'un répartiteur 221 d'admission.

Autrement dit, la boite de sortie 220 est ici réalisée sous la forme d'un répartiteur d'air d'admission pour le moteur permettant une communication, par l'intermédiaire d'orifices, avec au moins une partie des conduits d'admission des têtes de cylindre du moteur.

La figure 1 a montre le faisceau d'échange de chaleur 100 en place dans l'échangeur 10 tandis que, sur la figure 1b, seul le logement 101 pour le faisceau d'échange de chaleur 100 a été représenté. Autrement dit, dans la figure 1b, l'échangeur de chaleur selon l'invention est représenté sans son faisceau d'échange de chaleur.

Le faisceau d'échange de chaleur 100 pourra être réalisé soit par un ensemble de tubes parallèles soit par un empilement de plaques.

Dans l'exemple de réalisation ici représenté, le faisceau d'échange de chaleur est réalisé par un empilement de plaques formant alternativement des canaux de circulation pour l'air suralimenté à refroidir et des canaux pour la circulation du fluide caloporteur, ici le liquide de refroidissement du moteur.

Ainsi que le montre la figure 1a, le liquide de refroidissement pénètre dans le faisceau d'échange de chaleur 100 par une tubulure 120 d'entrée du liquide de refroidissement dans le faisceau d'échange de chaleur et en ressort par une tubulure 110 de sortie du liquide de refroidissement du le faisceau d'échange de chaleur.

Comme représenté sur les figures 1a et 1b, une vanne 300 de contrôle de débit d'air d'alimentation est disposée dans la boîte collectrice 210 d'entrée. Cette vanne 300 de contrôle est du type « trois voies » comprenant un corps 310 muni de trois ouvertures, à savoir une ouverture 311 d'entrée d'air de suralimentation raccordée au conduit 11 d'entrée, une ouverture de sortie d'air de suralimentation, non représentée, vers le faisceau d'échange de chaleur 100, et une ouverture 313 de sortie d'air de suralimentation vers une conduite 13 de contournement du faisceau d'échange de chaleur 100, partiellement représenté, permettant à au moins une partie de l'air de suralimentation de court-circuiter le faisceau d'échange de chaleur 100.

Ainsi, l'air de suralimentation arrivant, ici, par l'intermédiaire de la conduite 11, entre dans l'échangeur en traversant la vanne de contrôle de débit d'air 300. La vanne de contrôle permet ensuite de répartir le débit d'air dans le faisceau 100 d'échange de chaleur et/ou dans la conduite de contournement 13. Autrement dit, la boite collectrice est munie d'un orifice d'entrée communiquant avec l'entrée pour l'air de la vanne de contrôle 300, ici l'ouverture 311 d'entrée.

Le corps de la vanne est ici réalisé venu de matière avec la boite collectrice d'entrée. Autrement dit, un logement d'accueil pour un organe rotatif de la vanne est prévu dans la boite collectrice. Ce logement d'accueil forme le corps de vanne et comporte les trois ouvertures susmentionnées.

Le partage du débit d'air de suralimentation entre la boîte collectrice 210 et le circuit 13 de contournement du faisceau est réalisé du fait que la vanne 300 comprend également un seul organe rotatif 320, ou boisseau, mobile à l'intérieur du corps 310 de manière à contrôler la circulation de l'air à travers le faisceau d'échange de chaleur 100 et/ou à travers la conduite 13 de contournement selon une loi définie en fonction de la position angulaire de l'organe rotatif 320 dans le corps 310. Ainsi, la loi de circulation de l'air de suralimentation à travers chacune des ouvertures de sortie est une loi progressive et non une loi binaire en tout ou rien.

On rappelle que cette disposition avantageuse a pour objet d'ajuster de manière fine le débit et la température de l'air de suralimentation entrant dans le moteur par le répartiteur 221 d'admission en fonction des phases de vie du moteur.

En particulier, en phase de démarrage à froid, l'ouverture 313 de sortie vers la conduite 13 de contournement est ouverte tandis que l'ouverture de sortie vers le faisceau d'échange de chaleur 100 est complètement fermée.

La fermeture simultanée des deux ouvertures conduit à l'étouffement du moteur.

Enfin, les ouvertures de sortie peuvent être commandées chacune selon une loi progressive afin d'obtenir la température et le débit d'air d'alimentation requis en fonction de la puissance demandée.

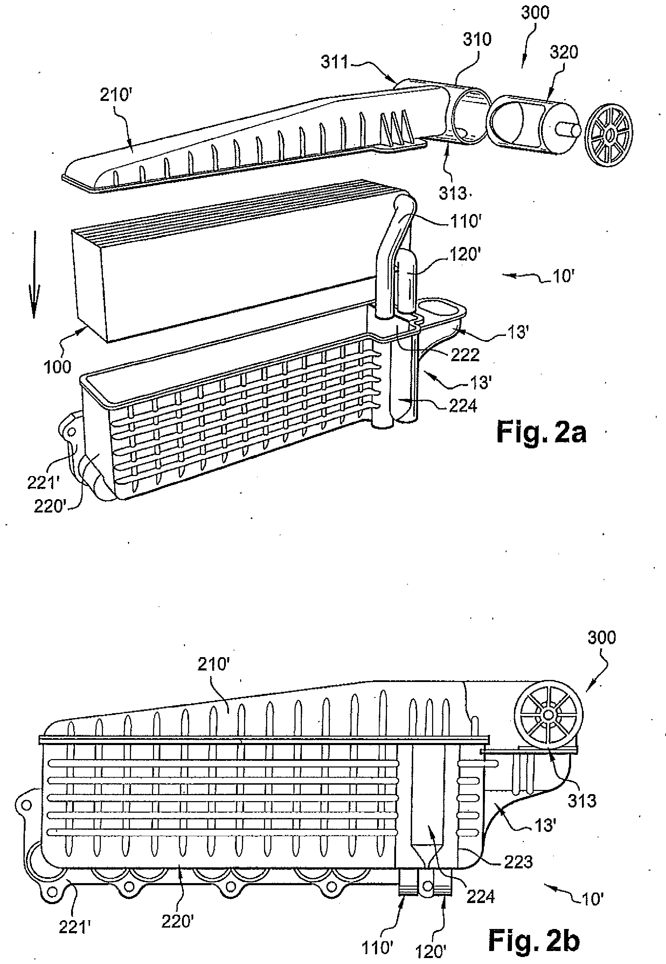

Les figures 2a et 2b se rapportent à un mode de réalisation particulier d'un échangeur 10' de chaleur du même type que l'échangeur 10 de chaleur illustré aux figures 1a et 1 b.

On peut voir sur les figures 2a et 2b que la boîte 220' de sortie, ici aussi réalisée sous la forme d'un répartiteur 221' d'admission, forme au moins en partie un boîtier destiné à recevoir le faisceau d'échange de chaleur 100. Dans ce mode de réalisation, la totalité du faisceau est introduite dans le boîtier. L'introduction du faisceau se fait parallèlement au sens de circulation de l'air d'alimentation, représenté sur les figures par les flèches verticales.

Dans ce mode de réalisation, la conduite 13' de contournement est intégrée au boîtier 220' et débouche à travers une ouverture 223 ménagée dans une paroi 222 du boîtier. La conduite 13' s'étend entre l'ouverture 313 de sortie de la vanne 300 de contrôle et l'ouverture 223 de manière sensiblement parallèle à la direction de la circulation de l'air de suralimentation dans le faisceau d'échange de chaleur 100. Ici, la circulation de l'air de suralimentation dans le faisceau d'échange de chaleur se fait, sur les figures 2a et 2b, du haut vers le bas.

La conduite 13' débouche au même niveau que la sortie du faisceau d'échange de chaleur, c'est-à-dire au niveau des orifices permettant la communication avec les conduits d'admission des têtes de cylindre du moteur.

Le boîtier 220' formant boîte de sortie et incluant le conduit 13' de contournement peut être complètement fermé au moyen de la boîte collectrice 210' d'entrée dont on peut voir sur la figure 2b qu'elle reçoit l'air de suralimentation de l'ouverture 312 du corps 310 de la vanne 300 de contrôle. Ici aussi, le corps 310 de la vanne est incorporé à ladite boîte collectrice 210'. Autrement dit, le corps 310 est venu de matière de la boite collectrice 210'.

La figure 2a montre également que les tubulures 120', 110' d'entrée et de sortie pour la circulation du liquide de refroidissement moteur dans le faisceau sont disposés parallèlement à la direction de circulation de l'air d'alimentation dans le refroidisseur. Ceci permet un encastrement de du faisceau d'échange de chaleur dans le boîtier. On peut d'ailleurs envisager d'intégrer complètement les tubulures 110', 120' à l'intérieur du boîtier 220' dans un logement 224 formant saillie ménagé sur une paroi du boîtier 220'.

Bien entendu, les tubulures 110', 120' pourraient être disposées de part et d'autre du refroidisseur 100 et non du même côté.

Après avoir introduit le faisceau d'échange de chaleur 100 dans le boîtier 220', le couvercle 210' est mis en place sur le boîtier pour y être soudé. On obtient alors un échangeur 10' de chaleur très compact, étanche et intégrant sous une forme monobloc toutes les fonctions nécessaires au traitement approprié de l'air d'alimentation selon les phases de vie du moteur, comme cela a été expliqué plus haut.

Enfin, il faut également noter que si l'invention a été décrite en prenant pour boîte collectrice la boîte d'entrée de l'échangeur de chaleur, cela n'a rien de limitatif puisqu'il est tout à fait possible de mettre en oeuvre les enseignements de l'invention en intégrant la vanne de contrôle dans la boîte collectrice de sortie de l'échangeur de chaleur. Il suffit pour cela d'inverser la position de la vanne par rapport au sens de circulation de l'air d'alimentation.

## Revendications

1. Echangeur (10; 10') de chaleur pour circuit d'alimentation en air d'un moteur de véhicule automobile, comprenant un faisceau d'échange de chaleur (100), une boîte collectrice de sortie (220,220') et une boîte collectrice d'entrée (210 ; 210'), **caractérisé en ce que** ledit échangeur de chaleur comprend une vanne (300) de contrôle de débit de l'air disposée dans l'une desdites boîtes collectrices (210 ; 210') de l'échangeur, et **en ce que** ladite vanne (300) de contrôle est une vanne comprenant un corps (310) comportant trois ouvertures (311, 313) et un organe rotatif mobile (320) à l'intérieur dudit corps de manière à contrôler la circulation d'air à travers ledit faisceau d'échange (100) et/ou à travers une conduite (13 ; 13') de contournement dudit faisceau (100) selon une loi définie en fonction de la position angulaire dudit organe rotatif (320) dans ledit corps (310).

2. Echangeur selon la revendication 1, dans lequel ledit échangeur comporte en outre une conduite (13 ; 13') de contournement dudit faisceau (100).

3. Echangeur de chaleur selon la revendication 1 ou 2, dans lequel ladite boîte collectrice dans laquelle est disposée la vanne (300) de contrôle de débit de l'air est une boîte collectrice de sortie de l'échangeur de chaleur (10).

4. Echangeur de chaleur selon la revendication 1 ou 2, dans lequel ladite boîte collectrice dans laquelle est disposée la vanne (300) de contrôle de débit de l'air est une boîte collectrice (210 ; 210') d'entrée de l'échangeur de chaleur (10 ; 10').

5. Echangeur de chaleur selon la revendication 4, dans lequel ladite boite collectrice de sortie forme au moins en partie un boîtier (220') destiné à recevoir ledit faisceau d'échange de chaleur (100).

6. Echangeur de chaleur selon la revendication précédente, dans lequel ladite conduite (13') de contournement est intégrée au boîtier (220') et débouche à travers une ouverture (223) ménagée dans une paroi (222) dudit boîtier (220').

7. Echangeur de chaleur selon la revendication 4 à 6, dans lequel ladite boîte collectrice (210') d'entrée munie de ladite vanne (300) de contrôle constitue un couvercle pour ledit boîtier (220').

8. Echangeur de chaleur selon la revendication précédente, dans lequel ladite boîte collectrice (210') d'entrée est soudée à ladite boîte (220') collectrice de sortie.

9. Echangeur de chaleur selon l'une des revendications 4 à 8, dans lequel ladite boite de sortie (220, 220') est un répartiteur d'air d'admission pour le moteur permettant une communication, par l'intermédiaire d'orifices, avec au moins une partie des conduits d'admission des têtes de cylindre du moteur.

10. Echangeur de chaleur selon la revendication 9, dans lequel des tubulures (110', 120') d'entrée et de sortie du liquide de refroidissement dans ledit faisceau d'échange de chaleur sont disposées à l'intérieur dudit boîtier (220').

## Patentansprüche

1. Wärmetauscher (10; 10') für einen Luftzufuhrkreis eines Kraftfahrzeugmotors, der ein Wärmetauscherbündel (100), einen Ausgangs-Sammelbehälter (220, 220') und einen Eingangs-Sammelbehälter (210; 210') enthält, **dadurch gekennzeichnet, dass** der Wärmetauscher ein Luftdurchsatz-Regelventil (300) enthält, das in einem der Sammelbehälter (210; 210') des Tauschers angeordnet ist, und dass das Regelventil (300) ein Ventil ist, das einen Körper (310), der drei Öffnungen (311, 313) aufweist, und ein im Inneren des Körpers bewegliches drehbares Organ (320) enthält, so dass es die Luftzirkulation durch das Tauscherbündel (100) und/oder durch eine Leitung (13; 13') zur Umgehung des Bündels (100) gemäß einem Gesetz regelt, das abhängig von der Winkelstellung des drehbaren Organs (320) im Körper (310) definiert wird.

2. Tauscher nach Anspruch 1, wobei der Tauscher außerdem eine Leitung (13; 13') zur Umgehung des Bündels (100) aufweist.

3. Wärmetauscher nach Anspruch 1 oder 2, wobei der Sammelbehälter, in dem das Luftdurchsatz-Regelventil (300) angeordnet ist, ein Ausgangs-Sammelbehälter des Wärmetauschers (10) ist.

4. Wärmetauscher nach Anspruch 1 oder 2, wobei der Sammelbehälter, in dem das Luftdurchsatz-Regelventil (300) angeordnet ist, ein Eingangs-Sammelbehälter (210; 210') des Wärmetauschers (10; 10') ist.

5. Wärmetauscher nach Anspruch 4, wobei der Ausgangs-Sammelbehälter mindestens zum Teil ein Gehäuse (220') formt, das dazu bestimmt ist, das Wärmetauscherbündel (100) aufzunehmen.

6. Wärmetauscher nach dem vorhergehenden Anspruch, wobei die Umgehungsleitung (13') in das Gehäuse (220') integriert ist und durch eine Öffnung (223) mündet, die in einer Wand (222) des Gehäuses (220') ausgespart ist.

7. Wärmetauscher nach Anspruch 4 bis 6, wobei der mit dem Regelventil (300) versehene Eingangs-Sammelbehälter (210') einen Deckel für das Gehäuse (220') bildet.

8. Wärmetauscher nach dem vorhergehenden Anspruch, wobei der Eingangs-Sammelbehälter (210') an den Ausgangs-Sammelbehälter (220') geschweißt ist.

9. Wärmetauscher nach einem der Ansprüche 4 bis 8, wobei der Ausgangsbehälter (220, 220') ein Ansaugluftverteiler für den Motor ist, der eine Verbindung, mittels Öffnungen, mit mindestens einem Teil der Ansaugkanäle der Zylinderköpfe des Motors ermöglicht.

10. Wärmetauscher nach Anspruch 9, wobei Eingangs- und Ausgangsstutzen (110', 120') der Kühlflüssigkeit in das Wärmetauscherbündel im Inneren des Gehäuses (220') angeordnet sind.

## Claims

1. Heat exchanger (10;10') for the air supply circuit of a motor vehicle engine, comprising a heat exchange core (100), an outlet header tank (220, 220') and an inlet header tank (210; 210'), **characterized in that** said heat exchanger comprises an air flow rate control valve (300) arranged in one of said header tanks (210; 210') of the exchanger, and **in that** said control valve (300) is a valve comprising a body (310) with three openings (311, 313) and a moving rotary member (320) inside said body so as to control the circulation of air through said exchange core (100) and/or through a duct (13; 13') bypassing said core (100) according to a law defined as a function of the angular position of said rotary member (320) in said body (310).

2. Exchanger according to Claim 1, in which said exchanger also comprises a duct (13; 13') bypassing said core (100).

3. Heat exchanger according to Claim 1 or 2, in which said header tank in which the air flow rate control valve (300) is arranged is an outlet header tank of the heat exchanger (10).

4. Heat exchanger according to Claim 1 or 2, in which said header tank in which the air flow rate control valve (300) is arranged is an inlet header tank (210; 210') of the heat exchanger (10; 10').

5. Heat exchanger according to Claim 4, in which said outlet header tank at least partly forms a housing (220') intended to receive said heat exchange core (100).

6. Heat exchanger according to the preceding claim, in which said bypass duct (13') is incorporated in the housing (220') and opens out through an opening (223) provided in a wall (222) of said housing (220').

7. Heat exchanger according to Claim 4 to 6, in which said inlet header tank (210') provided with said control valve (300) forms a cover for said housing (220').

8. Heat exchanger according to the preceding claim, in which said inlet header tank (210') is welded to said outlet header tank (220').

9. Heat exchanger according to one of Claims 4 to 8, in which said outlet tank (220, 220') is an induction air distributor for the engine allowing communication, via orifices, with at least some of the induction ducts of the engine cylinder heads.

10. The heat exchanger according to Claim 9, in which inlet and outlet manifolds (110', 120') for the coolant in said heat exchange core are arranged inside said housing (220').
